## Europäisches Patentamt

## European Patent Office

## Office européen des brevets

(19)

(11) Veröffentlichungsnummer: **0 187 360**
**B1**

(12) **EUROPÄISCHE PATENTSCHRIFT**

(45) Veröffentlichungstag der Patentschrift:
05.07.89

(21) Anmeldenummer: 85116410.3

(22) Anmeldetag: 21.12.85

(51) Int. Cl.⁴: **B 29 C 67/22, B 29 B 7/76**

(54) Kombination aus Mischer und Formwerkzeug zum Herstellen von Formteilen aus einem fliessfähigen Reaktionsgemisch aus mindestens zwei fliessfähigen Reaktionskomponenten.

(30) Priorität: 05.01.85 DE 3500235

(43) Veröffentlichungstag der Anmeldung:
16.07.86 Patentblatt 86/29

(45) Bekanntmachung des Hinweises auf die Patenterteilung:
05.07.89 Patentblatt 89/27

(84) Benannte Vertragsstaaten:
DE FR GB IT

(56) Entgegenhaltungen:
EP-A- 0 000 886
EP-A- 0 024 610
DE-A- 2 348 608
DE-A- 2 612 812
DE-A- 3 216 647
DE-A- 3 341 308
FR-A- 2 243 808

KUNSTSTOFFBERATER, Jahrgang 26, Juli/August 1981,
Seiten 24-26, Frankfurt/Main, DE; Dr. U. KNIPP:
"Herstellung von PUR-Integralschaumteilen"
Idem

(73) Patentinhaber: BAYER AG,
D-5090 Leverkusen 1 Bayerwerk (DE)

(72) Erfinder: Schulte, Klaus, Dipl.-Ing.,
Kurt-Schumacher-Ring 91b, D-5090 Leverkusen 1 (DE)
Erfinder: Ersfeld, Heinrich, Biesenbach 23;
D-5090 Leverkusen 3 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung richtet sich auf eine Vorrichtung zum Herstellen von Formteilen aus einem fliessfähigen Reaktionsgemisch aus mindestens zwei fliessfähigen Reaktionskomponenten, bestehend aus Mischer und Formwerkzeug, wobei sich zwischen der Mischkammer des Mischers und dem Formhohlraum des Formwerkzeuges ein Querschnittveränderungen aufweisender Angusskanal erstreckt und die Formtrennebene entlang des Angusskanals verläuft, wobei die Querschnittsveränderungen aus einem Drosselspalt und einer dahinter angeordneten Beruhigungskammer bestehen und die Formtrennebene auch durch den Trosselspalt und die Beruhigungskammer verläuft.

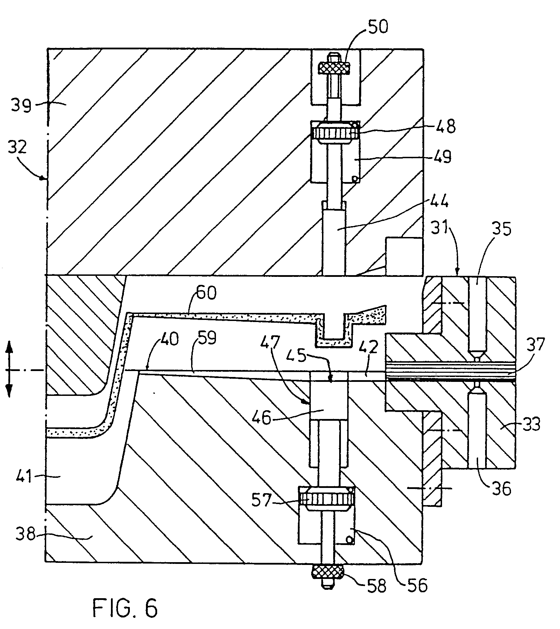

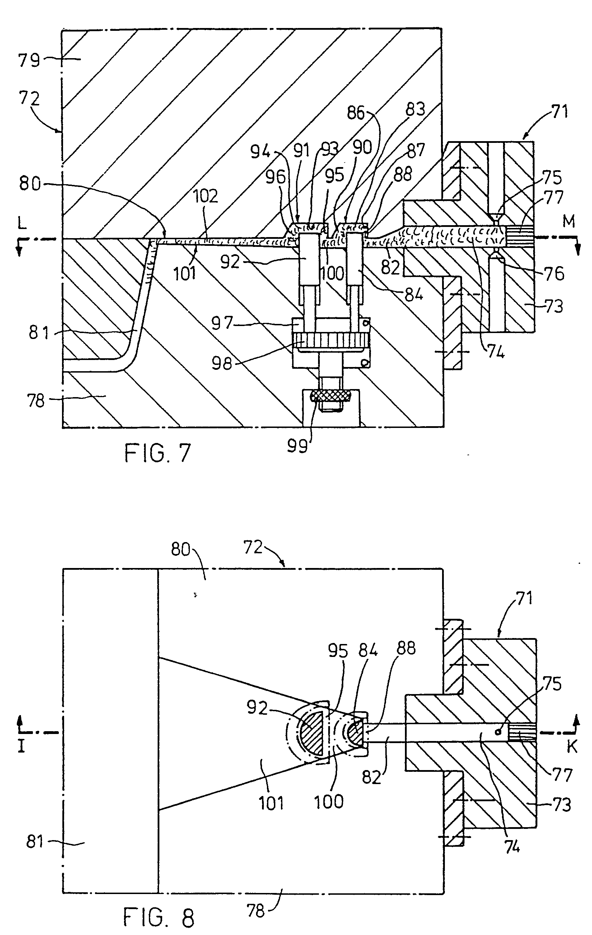

Derartige Vorrichtungen aus Mischer und Formwerkzeug dienen insbesondere der Formverschäumung von Polyurethan-Reaktionsgemischen zu Formteilen und sind z.B. aus dem Dokument KUNSTSTOFFBERATER, Jahrgang 26, Juli/August 1981, Seiten 24-26, Frankfurt/Main, DE; Dr. U. Knipp «Herstellung von PUR-Integralschaumteilen», Fig. 6a, 7; Tabelle 1.2: Seite 26, Spalte 1, Zeilen 4–16, ersichtlich.

Eine solche Kombination kann verschiedenartig gestaltet sein: Der Mischer kann in das Formwerkzeug integriert sein; er kann als Aufbaumischkopf am Formwerkzeug fixiert sein; er kann aber auch nur für den Formfüllvorgang an das Formwerkzeug ansetzbar sein.

Bei einer solchen Kombination ist es heute selbstverständlich, dass der Mischer selbstreinigend arbeiet oder dass der in der Mischkammer verbleibende Gemischrest mit entformbar ist. Mischer, welche gespült werden müssen, sind früher für derartige Zwecke verwendet worden, werden aber wegen der reinigungstechnischen Prblematik und allen damit verbundenen Nachteilen heute nicht mehr eingesetzt.

Aus DE-A 2612812 (entsprechend US-A 4141470) ist bei einem Mischer anschliessend an die Mischkammer ein Drosselorgan in einer sich quer zur Führungsbohrung eines Ausstosskolbens erstreckenden Bohrung in eine den Querschnitt der Führungsbohrung drosselnde und eine diese freigebende Stellung bewegbar, wobei das Drosselorgan einen Durchbruch aufweist, dessen Querschnitt mindestens dem Querschnitt des Ausstosskolbens entspricht. Mittels des Drosselorgans ist es möglich, den Mischkammerdruck und die Austrittsgeschwindigkeit des Reaktionsgemisches aus der Mischkammer zu beeinflussen, eine Nachvermischung zu erzielen und in einem anschliessenden Auslaufrohr eine Strömungsberuhigung herbeizuführen. Dieser Mischer versagt aber beim Einsatz für die Herstellung hochreaktiver Reaktionsgemische, welche sich innerhalb weniger Sekunden verfestigen, insbesondere dann, wenn grosse Formhohlräume zu füllen sind. Mit Beenden des Mischvorganges muss das Drosselorgan nämlich aus seiner Arbeitsstellung zunächst in Ruhestellung gebracht werden, bevor mittels des Ausstosskolbens die Mischkammer und das anschliessende Auslaufrohr entleert werden können. Wegen der Trägheit der Steuerungsvorgänge und des im Steuersystem zwangsläufig enthaltenen Spiels kann die Bewegung des Ausstosskolbens erst eingeleitet werden, wenn das Drosselorgan mit Sicherheit seine Ruhestellung eingenommen hat, um eine Kollision zu vermeiden. Da die Bewegung des Drosselorgans und die anschliessende Auslösung des Ausstosskolbens etwa 1 Sekunde in Anspruch nimmt, wäre das in den Formhohlraum eingebrachte und noch im Auslaufrohr bzw. in der Mischkammer vorhandene Gemisch zumindest bereits teilweise ausgehärtet, bevor der Reinigungsvorgang einsetzt. Damit treten natürlich Schwierigkeiten auf.

Andererseits ist es aus der DE-A 3 216 647 (entsprechend EP-A 0 093 356) bekannt, bei einer Kombination von Mischer mit Formwerkzeug im Anschluss an die Mischkammer im Angusskanal eine wesentliche Reduzierung des Querschnittes gegenüber der Mischkammer vorzunehmen und mehrfache Umlenkungen und Querschnittsänderungen vorzusehen, um durch die damit hervorgerufenen Änderungen der Strömungsverhältnisse eine Nachvermischung des Reaktionsgemisches zu erreichen. Bei diesem Mischer kann der Reinigungsvorgang schneller eingeleitet werden, weil kein verschiebbares Drosselorgan am Ausgang der Mischkammer vorhanden ist. Die im Angusskanal vorgesehenen Querschnittsänderungen und Umlenkungen sind aber so ausgebildet, dass sie lediglich eine Nachvermischung bewirken. Eine Beruhigungsstrecke ist nicht vorhanden. Wegen der starken Umlenkungen schiesst das Reaktionsgemisch mit hoher Geschwindigkeit in den Formhohlraum. Dabei lässt sich das Einschlagen von Luft nicht vermeiden. Das damit verbundene Aufreissen der Strömung und Spritzen kann gerade bei hochreaktiven Systemen beim anschliessenden Wiederzusammenfliessen innerhalb des Formteils Grenzflächenkonturen verursachen, welche die Homogenität des Formteils beeinträchtigen und die mechanische Festigkeit herabsetzen.

Es besteht die Aufgabe, ebenso wie bei den bisher bekannten Kombinationen aus Mischer und Formwerkzeug den Mischkammerdruck und die Austrittsgeschwindigkeit des Reaktionsgemisches aus der Mischkammer beeinflussen zu können und eine Nachvermischung zu ermöglichen, wobei aber auch hochreaktive Systeme, also solche, welche innerhalb weniger Sekunden aushärten, verarbeitbar sind.

Besonderes Augenmerk ist dabei auf die Strömungsberuhigung zu richten, damit beim Formfüllvorgang eine geschlossene Fliessfront sichergestellt ist und die gesamte für die Herstellung des Formteils erforderliche Gemischmenge bereits in den Formhohlraum eingebracht werden kann, bevor die Aushärtung einen kritischen Zeitpunkt überschritten hat.

Die Aufgabe wird dadurch gelöst, dass die Beruhigungskammer den Angusskanal vollständig überlappt und sich der Querschnitt des Angusskanals zumindest unmittelbar hinter der Beruhigungskammer erweitert.

Auf diese Weise bleiben alle Vorteile eines Mischers mit Drosselorgan erhalten; der maschinentechnische und funktionstechnische Aufwand wird jedoch herabgesetzt und die Betriebssicherheit erhöht. Damit wird die Verarbeitbarkeit von Reaktionsgemischen mit einer Verfestigungszeit von 1,5 Sekunden und sogar darunter möglich. Dadurch, dass hinter dem Drosselspalt eine Beruhigungskammer vorgesehen ist, welche sich über den Querschnitt des Angusskanals hinaus erstreckt und sich vorzugsweise stetig erweitert, und dass noch ein ausreichend langer Abschnitt des Angusskanals vorhanden ist, wird gewährleistet, dass auch bei den erforderlichen hohen Füllgeschwindigkeiten das Reaktionsgemisch sich mit geschlossener Fliessfront im Formhohlraum ausbreitet und damit die Gefahr des Einschlagens von Luft ausgeschlossen wird. Der Verlauf der Formtrennebene durch den Drosselspalt und die Beruhigungskammer erlaubt es, dass das gesamte Angussstück mit entformt werden kann. Es versteht sich, dass dieses Merkmal auch die tangierende Berührung des Drosselspaltes und der Beruhigungskammer durch die Formtrennebene umfasst. Die Erfindung ist auf alle eingangs beschriebenen Arten eine Kombination aus Mischer und Formwerkzeug anwendbar.

Vorzugsweise ist der Querschnitt des Drosselspaltes einstellbar.

Diese Massnahme ermöglicht es, im Falle von Schwankungen in der Konsistenz durch Veränderung des Querschnittes des Drosselspaltes auf die Mischgüte Einfluss zu nehmen. Auch unerwünschte Schwankungen in der Raumtemperatur oder der Temperatur der Komponenten beeinflussen die Vermischung und lassen sich durch die Einstellbarkeit des Drosselspaltes kompensieren. Darüber hinaus ermöglicht ein einstellbarer Drosselspalt natürlich auch die Anpassung an verschiedenartige Reaktionsgemische. Sogar eine Einflussnahme während des Formfüllvorganges ist möglich. Beispielsweise kann der Drosselspalt zu Beginn des Mischvorganges auf die Grösse Null oder nahezu Null eingestellt werden, um eine besonders intensive Anfangsvermischung zu bewirken, und erst während des weiteren Verlaufs des Mischvorganges auf den Normalwert eingestellt werden.

Die Einstellbarkeit des Drosselspaltes lässt sich vorzugsweise dadurch bewirken, dass der Drosselspalt durch einen in seiner Hubweite einstellbaren Schieber und eine Gegenfläche gebildet ist. In üblicher Weise ist der Schieber beispielsweise als Hydraulikkolben ausgeführt und mit einer Anschlagschraube zum Einstellen der Hubweite ausgestattet. Soll der Schieber auch während des Formfüllvorganges verstellbar sein, so muss hierfür eine besondere Einstellvorrichtung vorgesehen sein.

Nach einer besonderen Ausführungsform weist die Beruhigungskammer über den Querschnitt des Angusskanals hinaus die Form einer Kugelkalotte auf.

Diese Form ist strömungstechnisch besonders günstig, um die im Drosselspalt erzeugte höhere Strömungsgeschwindigkeit schnell abzubauen und in eine laminare Strömung zu überführen, welche sich dann im anschliessenden Abschnitt des Angusskanals stabilisiert.

Dabei überschneiden sich vorzugsweise die Kreisumfangslinien von Kugelkalotte und Schieber auf der zur Mischkammer weisenden Seite.

Dadurch wird eine in der Längsausdehnung besonders kurze und auch noch variierende Gestaltung des Drosselspaltes erzielt, welche einen besonders raschen Geschwindigkeitsabbau der Strömung mit Nachvermischung insbesondere in Querrichtung bewirkt.

Nach einer anderen Ausführungsform ist der Drosselspalt durch eine Vertiefung mit in diese hineinreichendem Zapfen gebildet, wobei zwischen Zapfen und dem zur Mischkammer hin gelegenen Wandungsteil der Vertiefung ein erster Spalt, zwischen Zapfen und dem Boden der Vertiefung ein Drosselspalt und zwischen Zapfen und dem zum Formhohlraum hin gelegenen Wandungsteil der Vertiefung die Beruhigungskammer angeordnet sind, wobei der Querschnitt des Drosselspaltes grösser ist als derjenige des ersten Spaltes und der Querschnitt der Beruhigungskammer grösser ist als der des Drosselspaltes.

Auf diese Weise erfolgt der Geschwindigkeitsabbau in mehreren Stufen, was beispielsweise für höherviskose Reaktionsgemische vorteilhaft sein kann. Vorzugsweise sind Zapfen und Vertiefung rechteckig ausgeführt. Der Zapfen kann dabei abdichtend bis an die seitlichen Wandungsteile der Vertiefung reichen, kann dort aber auch einen Spalt bilden.

Vorzugsweise besteht auch hier der Zapfen aus einem in seiner Hubweite einstellbaren Schieber, für welchen ebenfalls die zuvor erläuterten Ausführungsformen anwendbar sind.

Nach einer besonderen Ausführungsform ist in der Vertiefung ein Schieber geführt, dessen Stirnfläche den Boden der Vertiefung bildet. Auch dieser Schieber lässt sich in seiner Hubweite vorzugsweise einstellbar gestalten, so dass in Kombination mit einem als Schieber ausgebildeten Zapfen die Länge des ersten Spaltes und gleichzeitig das Volumen der Beruhigungskammer einstellbar sind.

Gemäss einer weiteren besonderen Ausführungsform sind mehrere Drosselspalte und Beruhigungskammern abwechselnd hintereinander angeordnet.

Vorzugsweise weist dabei der jeweils folgende Drosselspalt gegenüber dem vorhergehenden grösseren Querschnitt auf.

Vorzugweise weist auch die jeweils folgende Beruhigungskammer gegenüber der vorhergehenden grösseres Volumen auf.

Auf diese Weise kann ganz gezielt eine stufenweise Nachvermischung mit Geschwindigkeitsabbau ermöglicht werden.

Das Vorhandensein eines Schiebers eröffnet gleichzeitig die Möglichkeit, dass der Schieber die Funktion eines Auswerfers für die Angussstange übernimmt.

In einer Zeichnung ist die neue Kombination aus Mischer und Formwerkzeug in mehreren Ausführungsbeispielen rein schematisch dargestellt und nachstehend näher erläutert.

Es zeigen:

Fig. 1 einen Längsschnitt gemäss Linie A–B in Fig. 2 durch die Kombination aus Mischer und Formwerkzeug gemäss einem ersten Ausführungsbeispiel in der Darstellung während des Formfüllvorganges,

Fig. 2 eine Draufsicht bzw. einen Schnitt gemäss Linie C–D in Fig. 1,

Fig. 3 die Kombination aus Mischer und Formwerkzeug gemäss Fig. 1 in der Darstellung des Entformungsvorganges,

Fig. 4 einen Längsschnitt gemäss Linie E–F in Fig. 5 durch die Kombination aus Mischer und Formwerkzeug gemäss einem zweiten Ausführungsbeispiel in Darstellung während des Formfüllvorganges,

Fig. 5 eine Draufsicht bzw. einen Schnitt gemäss Linie G–H in Fig. 4,

Fig. 6 die Kombination aus Mischer und Formwerkzeug gemäss Fig. 4 in der Darstellung während des Entformungsvorganges,

Fig. 7 einen Längsschnitt gemäss Linie I–K in Fig. 8 durch die Kombination aus Mischer und Formwerkzeug gemäss einem dritten Ausführungsbeispiel in Darstellung während des Formfüllvorganges,

Fig. 8 eine Draufsicht bzw. einen Schnitt gemäss Linie L–M in Fig. 7 und

Fig. 9 die Kombination aus Mischer und Formwerkzeug gemäss Fig. 7 in der Darstellung während des Entformungsvorganges.

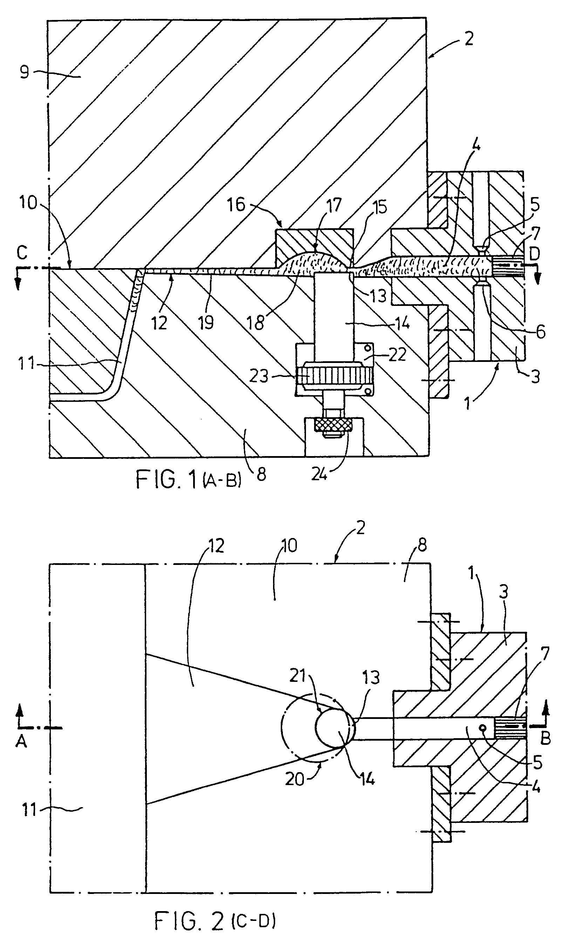

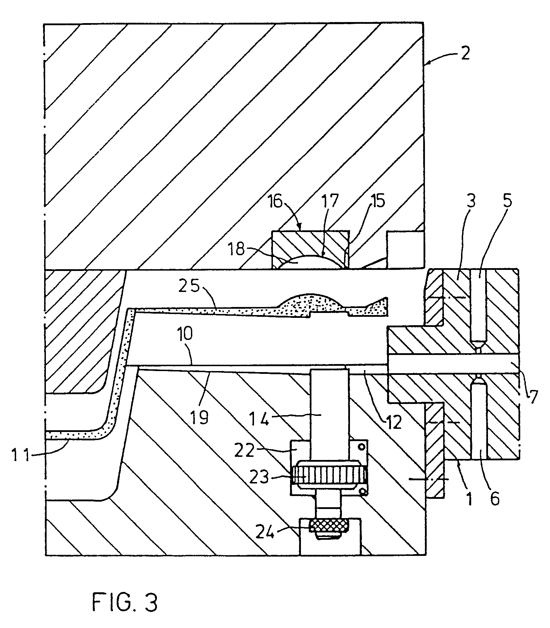

In Fig. 1 bis 3 besteht die Kombination aus einem angebauten Mischer 1 und einem Formwerkzeug 2. Der Mischer 1 umfasst ein Gehäuse 3 mit einer Mischkammer 4, in welche Einspritzdüsen 5, 6 für die Reaktionskomponenten einmünden, sowie einen Ausstosskolben 7. Der Mischer 1 ist an der unteren Formwerkzeughälfte 8 befestigt. Zwischen der unteren Formwerkzeughälfte 8 und der oberen Formwerkzeughälfte 9 verläuft die Formtrennebene 10 und ein von der Mischkammer 4 bis zu einem Formhohlraum 11 reichender Angusskanal 12. Er ist im wesentlichen in die untere Formwerkzeughälfte 8 eingebettet und wird von der Formtrennebene 10 tangiert. Der Angusskanal 12 verengt sich von der Mischkammer 4 zu einem Drosselspalt 13 hin. Dieser ist durch einen einstellbaren Schieber 14 und eine Gegenfläche 15 gebildet. Die Gegenfläche 15 ist Teil eines in die obere Formwerkzeughälfte 9 eingepassten Einsatzstückes 16, welches zum Angusskanal 12 hin die Kontur einer Kugelkalotte 17 aufweist. Dadurch ist hinter dem Drosselspalt 13 eine aus dem Volumen der Kugelkalotte 17 und dem Volumen des in diesem Bereich gelegenen Abschnittes des Angusskanals 12 bestehende Beruhigungskammer 18 gebildet. An sie schliesst sich der sich erweiternde und gleichzeitig verflachende Abschnitt 19 des Angusskanals 12 an. Die Kreisumfangslinie 20 der Kugelkalotte 17 und die Kreisumfangslinie 21 des Schiebers 14 überschneiden sich an ihrer zur Mischkammer 4 hin gelegenen Seite und bilden somit einen Drosselspalt 13 unterschiedlicher Länge. Der Schieber 14 ist als beidseitig beaufschlagbarer, in einer Hydraulikkammer 22 geführter Hydraulikkolben 23 gestaltet, welcher zum Einstellen der Hubweite und damit der Höhe des Drosselspaltes 13 mit einer verstellbaren Anschlagschraube 24 versehen ist. Nach dem Aushärten des Formteils und Öffnen des Formwerkzeuges 2 lässt sich das Formteil zusammen mit der Angussstange 25 entfernen.

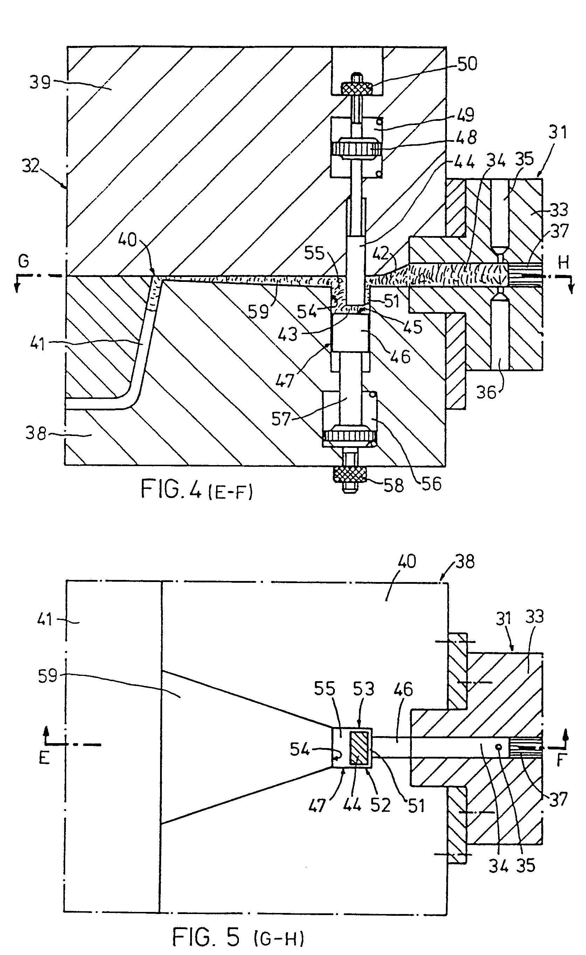

Auch in Fig. 4 bis 6 besteht die Kombination aus einem angebauten Mischer 31 und einem Formwerkzeug 32. Der Mischer 31 umfasst ein Gehäuse 33 mit einer Mischkammer 34, in welche Einspritzdüsen 35, 36 für die Reaktionskomponenten münden, sowie einen Ausstosskolben 37. Der Mischer 31 ist an der unteren Formwerkzeughälfte 38 befestigt. Zwischen der unteren Formwerkzeughälfte 38 und der oberen Formwerkzeughälfte 39 verläuft die Formtrennebene 40. Ein sich von der Mischkammer 34 bis zu einem Formhohlraum 41 erstreckender Angusskanal 42 ist im wesentlichen in die untere Formwerkzeughälfte 38 eingebettet und wird von der Formtrennebene 40 tangiert. Der Angusskanal 42 verengt sich von der Mischkammer 34 zu einem Drosselspalt 43 hin. Dieser ist durch einen einstellbaren, als Schieber 44 ausgebildeten Zapfen und eine Gegenfläche 45 gebildet, welche aus der Stirnfläche eines zweiten Schiebers 46 besteht. Der Schieber 46 bildet den Boden 45 einer Vertiefung 47, in welche der Schieber 44 hineinragt. Der Schieber 44 besitzt rechteckigen Querschnitt. Er ist mit einem Hydraulikkolben 48, welcher in einer Hydraulikkammer 49 geführt ist, versehen. Mittels einer Anschlagschraube 50 lässt sich die Hubweite einstellen. Der Schieber 44 bildet zwischen sich und dem der Mischkammer 34 zugewandten Wandungsteil 52 der Vertiefung 47 einen dem eigentlichen Drosselspalt 43 vorgeordneten Spalt 51 kleineren Querschnittes. Der Spalt 51 ist unveränderlich. Je nach Einstellung der Schieber 44 bis 46 ist jedoch seine Länge variabel. Der Schieber 44 ist an die seitlichen Wandungsteile 53 der Vertiefung 57 abdichtend angepasst. Zwischen dem Schieber 44 und dem zum Formhohlraum 41 weisenden Wandungsteil 54 erstreckt sich eine Beruhigungskammer 55. Ihr Volumen ist durch die Verstellung des Schiebers 46 einstellbar. Hierzu ist der Schieber 46 ebenfalls mit einem in einer Hydraulikkammer 56 geführten Ausstosskolben 57 und einer einstellbaren Anschlagschraube 58 versehen. An die Beruhigungskammer 55 schliesst der sich erweiternde und gleichzeitig verflachende Abschnitt 59 des Angusskanals 42 an. Einer der Schieber 44 und 46 lässt sich zusätzlich als Auswerfer ausbilden, wozu eine entsprechende Steuerung vozusehen ist. Dadurch lässt sich nach dem Öffnen des Formwerkzeugs 32 das Entformen der Angusstange 60 erleichtern.

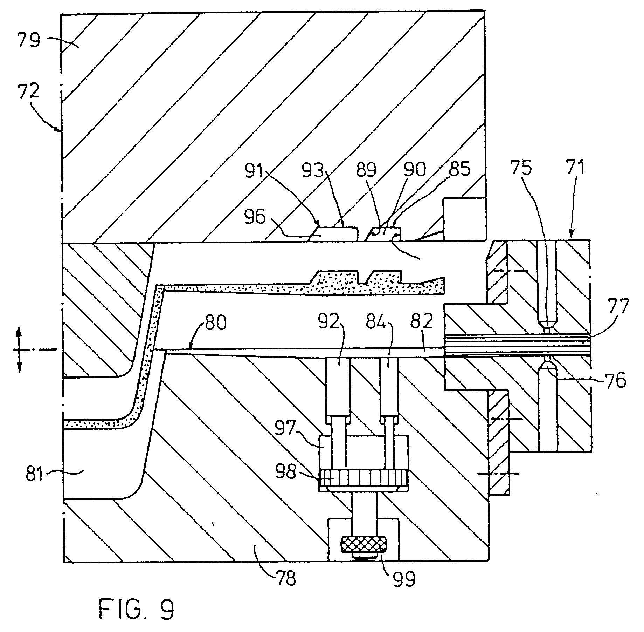

In Fig. 7 bis 9 besteht die Kombination aus einem Mischer 71 und einem Formwerkzeug 72, wobei der Mischer 71 an das Formwerkzeug 72 angebaut ist. Der Mischer 71 umfasst ein Gehäuse 73 mit einer Mischkammer 74, in welche Einspritzdüsen 75, 76 für die Reaktionskomponenten münden, sowie einen Ausstosskolben 77. Der Mischer 71 ist an der unteren Formwerkzeughälfte 78 befestigt. Zwischen der unteren Formwerkzeughälte 78 und der oberen Formwerkzeughälfte 79 verläuft die Formtrennebene 80. Ein sich von der Mischkammer 74 bis zu einem Formhohlraum 81 erstreckender Angusskanal 82 ist im wesentlichen in die untere Formwerkzeughälfte 78 eingebettet und wird von der Formtrennebene 80 tangiert. Der Angusskanal 82 verengt sich von der Mischkammer 74 zu einem Drosselspalt 83 hin. Dieser ist durch einen als Schieber 84 ausgebildeten Zapfen mit halbkreisförmigem Querschnitt und einer Gegenfläche 85, welche den Boden einer Vertiefung 86 darstellt, gebildet. Die Vertiefung 86 ist in der oberen Formwerkzeughälfte 79 angeordnet. Der Schieber 84 bildet mit dem zur Mischkammer 74 hin gelegenen Wandungsteil 87 der Vertiefung 86 einen dem eigentlichen Drosselspalt 83 vorgeordneten fixen Spalt 88. Zwischen der Rückseite des Schiebers 84 und dem zum Formhohlraum 81 hin gelegenen Wandungsteil 89 der Vertiefung 86 erstreckt sich eine Beruhigungskammer 90. Diese mündet über den Angusskanal 82 in eine zweite Vertiefung 91, in welche ebenfalls ein als Schieber 92 ausgebildeter Zapfen einfahrbar ist, welcher mit einer den Boden der Vertiefung 91 bildenden Gegenfläche 93 einen zweiten einstellbaren Drosselspalt 94 bildet. Auch hier ist dem Drosselspalt 94 ein fixer Spalt 95 vorgelagert. Hinter dem Schieber 92 ist eine zweite Beruhigungskammer 96 angeordnet. Der Drosselspalt 94 besitzt grösseren Querschnitt als der Drosselspalt 83, und die zweite Beruhigungskammer 96 weist grösseres Volumen auf als die Beruhigungskammer 90. Der Schieber 92 ist ebenfalls mit einem grösseren Querschnitt ausgestattet als der Schieber 84. Der Angusskanal 82 erweitert sich bereits vom Bereich des Schiebers 84 an hinter der Beruhigungskammer 96 bis zum Formhohlraum 81 hin. Die beiden Schieber 84 und 92 sind auf einem gemeinsamen, in einer Hydraulikkammer 97 geführten Hydraulikkolben 98 angeordnet, welcher mit einer Anschlagschraube 99 versehen ist. Die Hubweite der Schieber 84 und 92 ist bei dieser Ausführungsform also nur gemeinsam einstellbar. Die Schieber 84 und 92 können aber unterschiedlich lang gestaltet sein, so dass die Drosselspalte 83 und 94 verschiedene Höhe haben. Es versteht sich, dass die Schieber 84 und 92 auch getrennte hydraulische Antriebe besitzen können und damit einzeln einstellbar sind. Zwischen der Beruhigungskammer 90 und dem Schieber 92 erstreckt sich ein Abschnitt 100 des Angusskanals 82 und zwischen der Beruhigungskammer 96 und dem Formhohlraum 81 der Abschnitt 101. Die im Angusskanal 82 verbleibende Angussstange ist mit 102 bezeichnet.

## Patentansprüche

1. Vorrichtung zum Herstellen von Formteilen aus einem fliessfähigen Reaktionsgemisch aus mindestens zwei fliessfähigen Reaktionskomponenten, bestehend aus Mischer (1, 31, 71) und Formwerkzeug (2, 32, 72), wobei sich zwischen der Mischkammer (4, 34, 74) des Mischers (1, 31, 71) und dem Formhohlraum (11, 41, 81) des Formwerkzeuges (2, 32, 72) ein Querschnittsveränderungen aufweisender Angusskanal (12, 42, 82) erstreckt und die Formtrennebene (10, 40, 80) entlang des Angusskanals (12, 42, 82) verläuft, wobei die Querschnittsveränderungen aus einem Drosselspalt (13, 43, 83, 94) und einer dahinter angeordneten Beruhigungskammer (18, 55, 90, 96) bestehen und die Formtrennebene (10, 40, 80, 100, 101) auch durch den Drosselspalt (13, 43, 83, 94) und die Beruhigungskammer (18, 55, 90, 96) verläuft, dadurch gekennzeichnet, dass die Beruhigungskammer (18, 55, 90, 96) den Angusskanal (12, 42, 82) vollständig überlappt und sich der Querschnitt des Angusskanals (12, 42, 82) zumindest unmittelbar hinter der Beruhigungskammer (18, 55, 90, 96) erweitert.

2. Vorrichtung nach Anspruch 1, dadurch gekennzeichnet dass der Querschnitt des Drosselspaltes (13, 43, 83, 94) einstellbar ist.

3. Vorrichtung nach Anspruch 2, dadurch gekennzeichnet, dass der Drosselspalt (13, 43, 83, 94) durch einen in seiner Hubweite einstellbaren Schieber (14, 44, 84, 92) und eine Gegenfläche (15, 45, 85, 93) gebildet ist.

4. Vorrichtung nach einem der Ansprüche 1 bis 3, dadurch gekennzeichnet, dass die Beruhigungskammer (18) über den Querschnitt des Angusskanals (12) hinaus die Form einer Kugelkalotte (17) aufweist.

5. Vorrichtung nach den Ansprüchen 3 und 4, dadurch gekennzeichnet, dass die kreisumfangslinien (20, 21) von Kugelkalotte (17) und Schieber (14) auf der zur Mischkammer (14) weisenden Seite einander überschneiden.

6. Vorrichtung nach Anspruch 1, dadurch gekennzeichnet, dass eine Vertiefung (47, 86, 91) mit in diese hineinreichendem Zapfen (44, 84, 92) vorgesehen ist, wobei zwischen Zapfen (44, 84, 92) und dem zur Mischkammer (34, 74) hin gelegenen Wandungsteil (52, 87) der Vertiefung (47, 86, 91) ein erster Drosselspalt (51, 88, 95), zwischen diesem Drosselspalt (51, 88, 95) und dem zum Formhohlraum (41, 81) hin gelegenen Wandungsteil (54) der Vertiefung (47, 86, 91) die Beruhigungskammer (55, 90, 96) angeordnet ist, wobei als Teil dieser Beruhigungskammer (55, 90, 96) an den ersten Drosselspalt (51, 88, 95) zwischen dem Zapfen (44, 84, 92) und dem Boden (45, 85, 93) der Vertiefung (47, 86, 91) ein zweiter Drosselspalt (43, 83, 94) anschliesst, dessen Querschnitt grösser ist als derjenige des ersten Spaltes (51, 88, 95), aber kleiner als der Querschnitt der restlichen Beruhigungskammer (55, 90, 96).

7. Vorrichtung nach Anspruch 6, dadurch gekennzeichnet, dass der Zapfen (44, 84, 92) aus einem in seiner Hubweite einstellbaren Schieber (44, 84, 92) besteht.

8. Vorrichtung nach Anspruch 6 und 7, dadurch gekennzeichnet, dass in der Vertiefung (47) ein Schieber (46) geführt ist, dessen Stirnfläche den Boden (45) der Vertiefung (47) bildet.

9. Vorrichtung nach einem der Ansprüche 1 bis 8, dadurch gekennzeichnet, dass mehrere Drosselspalte (83, 94) und Beruhigungskammern (90, 96) abwechselnd hintereinander angeordnet sind.

10. Vorrichtung nach Anspruch 9, dadurch gekennzeichnet, dass der jeweils folgende Drosselspalt (94) gegenüber dem vorhergehenden grösseren Querschnitt aufweist.

11. Vorrichtung nach Anspruch 9 oder 10, dadurch gekennzeichnet, dass die jeweils folgende Beruhigungskammer (96) gegenüber der vorhergehenden grösseres Volumen aufweist.

## Claims

1. Devise for the production of mouldings from a flowable reaction mixture composed of at least two flowable reaction components, consisting of a mixer (1, 31, 71) and a mould (2, 32, 72), a feed channel (12, 42, 82) with changes in cross-sections extending between the mixing chamber (4, 34, 74) of the mixer (1, 31, 71) and the mould cavity (11, 41, 81) of the mould (2, 32, 72), and the mould parting plane (10, 40, 80) running along the feed channel (12, 42, 82), the changes in cross-section consisting of a restrictor gap (13, 43, 83, 94) and a downstream relaxation chamber (18, 55, 90, 96), and the mould parting plane (10, 40, 80, 100, 101) also running through the restrictor gap (13, 43, 83, 94) and the relaxation chamber (18, 55, 90, 96), characterized in that the relaxation chamber (18, 55, 90, 96) completely overlaps the fed channel (12, 42, 82) and the cross-section of the feed channel (12, 42, 82) widens at least directly after the relaxation chamber (18, 55, 90, 96).

2. Devise according to Claim 1, characterized in that the cross-section of the restrictor gap (13, 43, 83, 94) is adjustable.

3. Device according to Claim 2, characterized in that the restrictor gap (13, 43, 83, 94) is formed by a slide (14, 44, 84, 92) of adjustable stroke length and a countersurface (15, 45, 85, 93).

4. Device according to one of Claims 1 to 3, characterized in that the relaxation chamber (18) has, beyond the cross-section of the feed channel (12), the form of a spherical shell (17).

5. Device according to Claims 3 and 4, characterized in that the peripheral circle lines (20, 21) of the spherical shell (17) and the slide (14) mutually intersect on the side facing the mixing chamber (4).

6. Device according to Claim 1, characterized in that a recess (47, 86, 91) with a peg (44, 84, 92) projecting into it is provided, a first restrictor gap (51, 88, 95) being located between the peg (44, 84, 92) and the wall part (52, 87) of the recess (47, 86, 91) on the side of the mixing chamber (34, 74), the relaxation chamber (55, 90, 96) being located between this restrictor gap (51, 88, 95) and the wall part (54) of the recess (47, 86, 91) on the side of the mould cavity (41, 81), and a second restrictor gap (43, 83, 94) as part of this relaxation chamber (55, 90, 96) adjoining the first restrictor gap (51, 88, 95) between the peg (44, 84, 92) and the bottom (45, 85, 93) of the recess (47, 86, 91), which second restrictor gap has a cross-section greater than that of the first gap (51, 88, 95) but smaller than the cross-section of the remainder of the relaxation chamber (55, 90, 96).

7. Device according to Claim 6, characterized in that the peg (44, 84, 92) consists of a slide (44, 84, 92) of adjustable stroke length.

8. Device according to Claim 6 and 7, characterized in that a slide (46), the end face of which forms the bottom (45) of the recess (47), is guided in the recess (47).

9. Device according to one of Claims 1 to 8, characterized in that a plurality of restrictor gaps (83, 94) and relaxation chambers (90, 96) are arranged alternately in series.

10. Device according to Claim 9, characterized in that the next restrictor gap (94) in each case has a cross-section greater than that of the preceding one.

11. Device according to Claim 9 or 10, characterized in that the next relaxation chamber (96) in each case has a greater volume than the preceding one.

## Revendications

1. Dispositif de fabrication d'éléments moulés à partir d'un mélange réactionnel fluide constitué d'au moins deux composants réactionnels fluides, comportant un mélangeur (1, 31, 71) et un outil de moulage (2, 32, 72), un canal d'entrée (12, 42, 82), présentant des variations de sa section transversale, s'étendant entre la chambre de mélange (4, 34, 74) du mélangeur (1, 31, 71) et la cavité du moule (11, 41, 81) de l'outil de moulage (2, 32, 72), et le plan de séparation du moule (10, 40, 80) s'étendant le long du canal d'entrée, les variations de la section transversale étant dues à une fente d'étranglement (13, 43, 83, 94) et à une chambre de calmage (18, 55, 90, 96) située derrière celle-ci, et le plan de séparation du moule (10, 40, 80, 100, 101) traversant aussi la fente d'étranglement (13, 43, 83, 94) et la chambre de calmage (18, 55, 90, 96), caractérisé en ce que la chambre de calmage (18, 55, 90, 96) recouvre entièrement le canal d'entrée (12, 42, 82), et en ce que la section transversale du canal d'entrée (12, 42, 82) s'élargit au moins directement derrière la chambre de calmage (18, 55, 90, 96).

2. Dispositif selon la revendication 1, caractérisé en ce que la section transversale de la fente d'étranglement (13, 43, 83, 94) est réglable.

3. Dispositif selon la revendication 2, caractérisé en ce que la fente d'étranglement (13, 43, 83, 94) est formée par un coulisseau (14, 44, 84, 92) réglable dans sa course et par une surface antagoniste (15, 45, 85, 93).

4. Dispositif selon l'une des revendications 1 à 3, caractérisé en ce que la chambre de calmage (18) présente la forme d'une calotte sphérique (17) au-delà de la section transversale du canal d'entrée (12).

5. Dispositif selon les revendications 3 et 4, caractérisé en ce que les lignes de circonférence circulaire (20, 21) de la calotte sphérique (17) et du coulisseau (14) se recoupent l'une l'autre du côté tourné vers la chambre de mélange (4).

6. Dispositif selon la revendication 1, caractérisé en ce qu'il est prévu un creux (47, 86, 91) avec une tige (44, 84, 92): pénétrant dans celui-ci, une première fente d'étranglement (51, 88, 95) étant disposée entre la tige (44, 84, 92) et la partie de paroi (52, 87) du creux (47, 86, 91) tournée vers la chambre de mélange (34, 74), la chambre de calmage (55, 90, 96) étant disposée entre cette fente d'étranglement (51, 88, 95) et la partie de paroi (54) du creux (47, 86, 91) tournée vers la cavité du moule (41, 81), une deuxième fente d'étranglement (43, 83, 94) se raccordant à la première fente d'étranglement (51, 88, 95) entre la tige (44, 84, 92) et le fond (45, 85, 93) du creux (47, 86, 91) pour constituer un élément de cette chambre de calmage (55, 90, 96), la section transversale de cette deuxième fente d'étranglement étant supérieure à celle de la première fente (51, 88, 95), mais inférieure à la section transversale du reste de la chambre de calmage (55, 90, 96).

7. Dispositif selon la revendication 6, caractérisé en ce que la tige (44, 84, 92) est constituée d'un coulisseau (44, 84, 92) réglable dans sa course.

8. Dispositif selon les revendications 6 et 7, caractérisé en ce que dans le creux (47) est guidé un coulisseau (46) dont la face frontale forme le fond (45) du creux (47).

9. Dispositif selon l'une des revendications 1 à 8, caractérisé en ce que plusieurs fentes d'étranglement (83, 94) et chambres de calmage (90, 96) sont disposées alternativement l'une derrière l'autre.

10. Dispositif selon la revendication 9, caractérisé en ce que chaque fente d'étranglement (94) présente une section transversale supérieure à celle de la fente précédente.

11. Dispositif selon la revendication 9 ou 10, caractérisé en ce que chaque chambre de calmage (96) présente un volume supérieur à celui de la chambre précédente.

FIG. 1 (A-B)

FIG. 2 (C-D)

9

FIG. 3

FIG. 4 (E-F)

FIG. 5 (G-H)

FIG. 6

FIG. 7

FIG. 8

17

FIG. 9